(19) Europäisches Patentamt

European Patent Office

Office européen des brevets

(11) **EP 0 948 158 A2**

(12) **EUROPÄISCHE PATENTANMELDUNG**

(43) Veröffentlichungstag:
06.10.1999 Patentblatt 1999/40

(51) Int Cl.[6]: **H04L 9/08**

(21) Anmeldenummer: **99250080.1**

(22) Anmeldetag: **17.03.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **01.04.1998 DE 19816344**

(71) Anmelder: **Francotyp-Postalia GmbH**
**16547 Birkenwerder (DE)**

(72) Erfinder: **Baum, Volker**
**13189 Berlin (DE)**

(54) **Verfahren zur sicheren Schlüsselverteilung**

(57)     Ein Verfahren zur sicheren Schlüsselverteilung mit einer sicheren Schlüsselverteilzentrale umfaßt die folgenden Schritte:

(I) Erzeugen mindestens zweier gerätespezifischer Masterschlüssel in einer sicheren Schlüsselverteilzentrale (30),
(II) Ausstatten von Speichern von Geräten (i0), die zu einem System gehören, mit dem zugehörigem Masterschlüssel (MKEK-i), während der Herstellung der Geräte in einem gesicherten Bereich (50, 60),
(III) Verbinden der Geräte (10, 20,.., i0,..., x0) zu einem System und Initialisierung der zum System verbundenen Geräte (10, 20,.., i0,..., x0) über einen ungesicherten Kanal (37) mit Generierung, verschlüsselter Übermittlung von der sicheren Schlüsselverteilzentrale (30) und nichtflüchtiges Speichern eines entschlüsselten gemeinsamen geheimen Verschlüsselungsschlüssels (KEK) auslesesicher in den Speichern der Geräte des Systems, wobei jeweils zwei Geräte, welche miteinander kommunizieren sollen, mit einem geheimen gemeinsamen Verschlüsselungsschlüssel (KEK) ausgestattet werden.

Fig. 2

EP 0 948 158 A2

## Beschreibung

Die Erfindung betrifft ein Verfahren zur sicheren Schlüsselverteilung mit einer sicheren Schlüsselverteilzentrale gemäß des Oberbegriffs des Anspruchs 1. Die Erfindung ist für die Herstellung und Initialisierung von Frankiereinrichtungen bestehend aus mindestens zwei Geräten geeignet, die zusammen ein offenes System bilden aber dennoch fälschungssicher Daten austauschen können.

Es ist bekannt, daß ein Gerät, welches mit einem anderen Gerät sicherheitsrelevante Daten austauscht, einen sicheren Kanal aufweisen muß. So wird laut DE 24 38 055 C2 (US 3.938.095) eine elektronische Portomeßschaltung einerseits über eine Sicherheitsverbindung mit dem Drucker verbunden. Die elektronische Portomeßschaltung ist in einem gesicherten Gehäuse angeordnet und steht andererseits mit einem Rechner in Kommunikationsverbindung.

Werden alternativ solche sicherheitsrelevanten Daten, wie geldwerte Daten, über einen unsicheren Kanal transferiert, müssen die Daten auf eine andere geeignete Art und Weise gegen eine Manipulation in Fälschungsabsicht geschützt werden. Beispielsweise dürfen aufgezeichnete Datenübertragungssignale nicht zu einem unabgerechneten erneutem Abdruck führen, wenn sie erneut zum Druckkopf übermittelt werden.

Aus dem EP 716 398 A2 ist eine Frankiermaschine mit einer erweiterten Druckkopf-hardware und mit einer speziellen Druckdatensteuerung in einem ASIC bekannt. Das ASIC gestattet einerseits die Kommunikation mit den Sensoren und Aktoren und andererseits die Übermittlung eines Freischaltcodes und den Empfang eines Quittungscodes mit anschließendem Vergleich. Beide, sowohl die spezielle Druckdatensteuerung als auch die einer erweiterte Druckkopfhardware, sind mit einem Codegenerator ausgestattet, der für jede Druckbildübertragung einen einzigartigen Code generiert. Das ASIC dient somit für die Kommunikation mit dem Druckkopf als Sicherheitsmodul. Der Druckkopf ist seinerseits mit einer erweiterten Druckkopfhardware ausgestattet, welche zum Überprüfen eines empfangenen Freischaltcodes ausgebildet ist, um den Druckkopf für genau einen Abdruck freizuschalten.

Aus dem EP 789 333 A2 ist eine Frankiermaschine mit einem Sicherheitsmodul bekannt, welche die Abrechnung für die durchzuführenden Frankierungen vornimmt, wobei das Sicherheitsmodul von einem Sicherheitsgehäuse umgeben ist und den Datenfluß zum Drucker überwacht. Dieser Drucker kann einen manipulationssicheren Abdruck drucken, der eine einzigartige Markierung für jedes der Poststücke aufweist. Das Sicherheitsmodul könnte nun zusätzlich mit der vorgenannten speziellen Druckdatensteuerung oder um eine Verschlüsselungseinrichtung erweitert werden, um wenigstens einige Daten zu verschlüsseln und dann zum Drucker zu senden.

Ein Postverarbeitungssystem mit einer über Personalcomputer gesteuerten druckenden Maschinen-Basisstation, gemäß der nicht vorveröffentlichten deutschen Patentanmeldung Nr. 197 11 998.0, weist ein in einen Personalcomputer eingebautes Sicherheitsmodul auf, welches mit der Druckkopfelektronik über eine serielle Schnittstelle kommuniziert. Außerdem ist vorgesehen, daß von der Druckkopfelektronik die Authentizität mindestens einiger derjenigen vom Sicherheitsmodul gelieferten Druckdaten überprüft wird. Voraussetzung für die Erzeugung eines Codes bzw. einer Verschlüsselung ist ein geeigneter Algorithmus bzw. Verschlüsselungsalgorithmus mit entsprechenden Schlüsseln.

In der Druckschrift EP 782 111 A2 wird, zur gegenseitigen Authorisation von zwei Subsystemen mit Mikroprozessoren vorgeschlagen, zunächst in jedem Subsystem einen Sitzungsschlüssel auf gleiche Weise zu generieren, mit dessen Hilfe eine Verschlüsselung von variablen Daten zu einem Authentifikations Zertifikat ermöglicht wird. Das jeweils andere Subsystem erzeugt auf dieselbe Weise ebenfalls ein Authentifikations Zertifikat und vergleicht beide Zertifikate zwecks Authorisation. Die Verschlüsselung erfolgt nach dem DES-Algorithmus jeweils mittels Mikroprozessor. Jeder der beiden Mikroprozessoren kann eine Liste an Authentication Keys speichern, aus der er einen auswählt. Mit einer zweiten Variable und einem ausgewählten Authentication Key erzeugt jedes Subsystem den Sitzungsschlüssel nach einem Kryptoalgorithmus. Mit dem Sitzungsschlüssel und mit einer ersten Variable wird dann ein Authoriationscode gemäß einem Kryptoalgorithmus erzeugt. Das Zertifikat ergibt sich dann daraus durch Truncation. Für die Authentifikation des anderen Subsystems wird der gleiche Sitzungsschlüssel aber eine andere dritte Variable verwendet.

Eine einseitige Authorisation des zweiten Subsystems (print modul µP) gegenüber dem ersten Subsystem (vault µP) gemäß EP 782 113 A2 verwendet wieder den Sitzungsschlüssel und den gleichen Algorithmus, wobei nach Abrechnung im ersten Subsystem (vault µP) ein Authentifikations Zertifikat zum zweiten Subsystem (print modul µP) gesendet und dort verifiziert wird, indem dort auch auf gleiche Weise ein Authentifikations Zertifikat erzeugt und geprüft wird, ob die Zertifikate ein bestimmtes Verhältnis zueinander haben.

Bei einem ähnlichen Verfahren, dem Chalenge & Response-Verfahren, werden statt dem vorgenannten ausgewählten Authentication Key Zufallszahlen zur Erzeugung des Sitzungsschlüssels verwendet.

Bei den vorgenannten Lösungen muß bei der Schlüsselgenerierung die Synchronität gewahrt bleiben, da sich anderenfalls beide Geräte (Subsysteme) nicht verstehen können, was dann als fehlende Authorisation interpretiert wird.

Der Erfindung liegt die Aufgabe zugrunde, ein für Frankiermaschinen geeignetes Verfahren zur sicheren Schlüsselverteilung zu entwickeln, um eine Anzahl an Geräten mit einem gemeinsamen Schlüssel auszu-

2

statten, ohne daß der Schlüssel einer unbefugten Partei in die Hände fällt.

Die Aufgabe wird gemäß den Merkmalen des Anspruchs 1 gelöst.

Die Erfindung geht von einem Server aus, welcher als ein drittes Gerät die ersten und zweiten Geräte mit dem für den Schlüsseltausch erforderlichen gemeinsamen geheimen Verschlüsselungsschlüssel ausstattet, wenn ein solcher angefordert wird. Ebenso können mehrere Geräte eines Systems paarweise mit einem gemeinsamen geheimen Verschlüsselungsschlüssel ausgestattet werden.

Der Server hält eine Anzahl zusammengehöriger gerätespezifischer Masterschlüsseln für den Fall vorrätig gespeichert, daß ein gemeinsamer geheimer Verschlüsselungsschlüssel angefordert wird. Einer der gerätespezifischen Masterschlüssel ist identisch mit einem bei der Herstellung, vorzugsweise vor dem Zusammenbau des ersten Gerätes, im ersten Gerät gespeicherten Masterschlüssel. Der andere gerätespezifische Masterschlüssel ist identisch mit einem im zweiten Gerät befindlichen Masterschlüssel. Jedes der beiden Geräte ist damit in der Lage, nur eine für das jeweilige Gerät bestimmte Nachricht zu entschlüsseln. Es ist vorgesehen, daß die Nachricht einen geheimen ersten Verschlüsselungsschlüssel in verschlüsselter Form enthält und nach der erstmaligen Inbetriebnahme eines aus beiden Geräten bestehenden Systems von einem der beiden Geräte angefordert wird. Vorzugsweise ist nur das Meter mit einem Modem ausgestattet. Somit erfolgt die Anforderung vom Meter an den Server eine solche Nachricht an das Meter zu senden. Die Nachricht ist zweiteilig entsprechend der beiden Geräte, die schnittstellenmäßig miteinander verbunden sind und kommunizieren sollen.

Da Meter und Base schnittstellenmäßig miteinander verbunden sind, kann das Meter einen für die Base bestimmten Nachrichtenteil weiterleiten. Ebenso können weitere zwei Geräte eines Systems mit einem gemeinsamen geheimen Schlüssel durch Weiterleitung der Nachricht und deren gerätespezifischen Entschlüsselung ausgestattet werden, wenn die Geräte schnittstellenmäßig miteinander verbunden sind.

Der Server empfängt die Anforderung, generiert den erforderlichen gemeinsamen Verschlüsselungsschlüssel und bildet die beiden Teile der Nachricht, entsprechend der Identität der zu benachrichtigenden Geräte. Bei einen zweiteiligem System bestehend aus Meter und Base wird die zweiteilige Nachricht mit den Identizitätsdaten des Meters und der Base angefordert. Das Bilden jedes der Nachrichtenteile erfolgt mit dem der jeweiligen Identität zugeordneten gerätespezifischen Masterschlüssel, welcher auch im entsprechenden Gerät auslesesicher gespeichert vorliegt, für das der Nachrichtenteil bestimmt ist.

Nach dem Generieren des erforderlichen gemeinsamen Verschlüsselungsschlüssels und dem Bilden der Teile der Nachricht sowie dem Senden der Nachricht an das anfordernde Gerät wird der generierte gemeinsame Verschlüsselungsschlüssel im Arbeitsspeicher des Servers gelöscht. Eine unmittelbare Kompromittierung eines bestehenden System ist somit unmöglich, weil auch bei einem unerlaubten Einblick in die Datenbank des Servers die gemeinsamen Schlüssel nicht auffindbar sind.

Nach dem Empfang der Nachricht im anforderndem Gerät wird der Nachrichtenteil weitergeleitet, welcher nicht für das anfordernde Gerät bestimmt ist. Der nicht weitergeleitete Nachrichtenteil wird im anforderndem Gerät und der weitergeleitete Nachrichtenteil wird im anderen Gerät entschlüsselt. Der gemeinsame Verschlüsselungsschlüssel wird auslesesicher in jedem Gerät gespeichert und steht nun für einen geheimen Schlüsselaustausch eines Sitzungsschlüssels zur Verfügung.

Während der Herstellung der für das System bestimmten Geräte werden sowohl im auslesesicherem Speicher des Gerätes als auch in einer Datenbank des Servers die gerätespezifischen Masterschlüssel auslesesicher und die Identitätsdaten fälschungssicher gespeichert. Welche Geräte eines Systems als zusammengehörig gelten, ist abhängig davon, welche gerätespezifischen Identitätsdaten einander zugeordnet sind. Solche Zugehörigkeiten können von eine authorisierten Person in das Meter eingegeben bzw. beliebig erzeugt und gespeichert werden. Sie stehen für den Fall zur Verfügung, daß eines der Geräte ausgewechselt oder das System mit einem geeigneten Gerät ergänzt werden soll.

Ein ausgeliefertes Gerät enthält in seinem durch ein Sicherheitsgehäuse gesicherten nichtflüchtigem Speicher nur Identifikationsdaten und den gegenüber einem externen Auslesen gesicherten spezifischen Masterschlüssel gespeichert. Ein solches Gerät müßte in der Regel zerstört werden, um an den spezifischen Masterschlüssel zu gelangen, welcher aber nicht zu irgendeinem anderem Gerät paßt.

Beim Initialisieren der Geräte eines Systems könnte zwar mit einem kompromittierten Masterschlüssel die Übermittlung des des gemeinsamen geheimen Verschlüsselungsschlüssels aufgezeichnet und entschlüsselt werden. Es sind aber weitere Vorkehrungen getroffen worden, um ein eventuelles Abfangen und Verändern der Nachricht bzw. Übermitteln und Weiterleiten einer früher aufgezeichneten Nachricht an die Geräte des Systems auch dann unwirksam zu machen, wenn die Geräte wiederholt mit einem gemeinsamen geheimen Verschlüsselungsschlüssel ausgestattet werden.

Ein Vorteil der Erfindung liegt darin, daß die gemeinsamen geheimen Verschlüsselungsschlüssel über unsichere Kanäle sicher geändert bzw. ausgewechselt werden können. Somit müssen die Verschlüsselungsschlüssel nicht bereits bei der Herstellung des Gerätes in einem zugehörigen Speicher des Gerät nichfflüchtig gespeichert werden.

Durch eine begrenzte Gültigkeit des gemeinsamen geheimen Verschlüsselungsschlüssels wird ein eventueller Mißbrauch eines kompromittierten Systems auf kurze Zeiträume beschränkt. Selbst wenn durch Ausforschen des gemeinsamen geheimen Verschlüsselungsschlüssels ein ganzes System kompromittiert ist, dann wäre aber ein anderes ganzes System dadurch noch nicht kompromittiert.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1,     Anordung zur Ausstattung von Speichern mit einem Masterschlüssel,

Fig.2,     Anordung von zwei Geräten eines Systems zu deren Initialisierung mittels eines dritten Gerätes,

Fig.3,     Darstellung einer Initialisierung von zwei Geräten des Systems,

Fig.4,     Darstellung der Sitzungsschlüsselverteilung auf zwei Geräte des Systems,

Fig.5,     Details der Initialisierung von zwei Geräten des Systems.

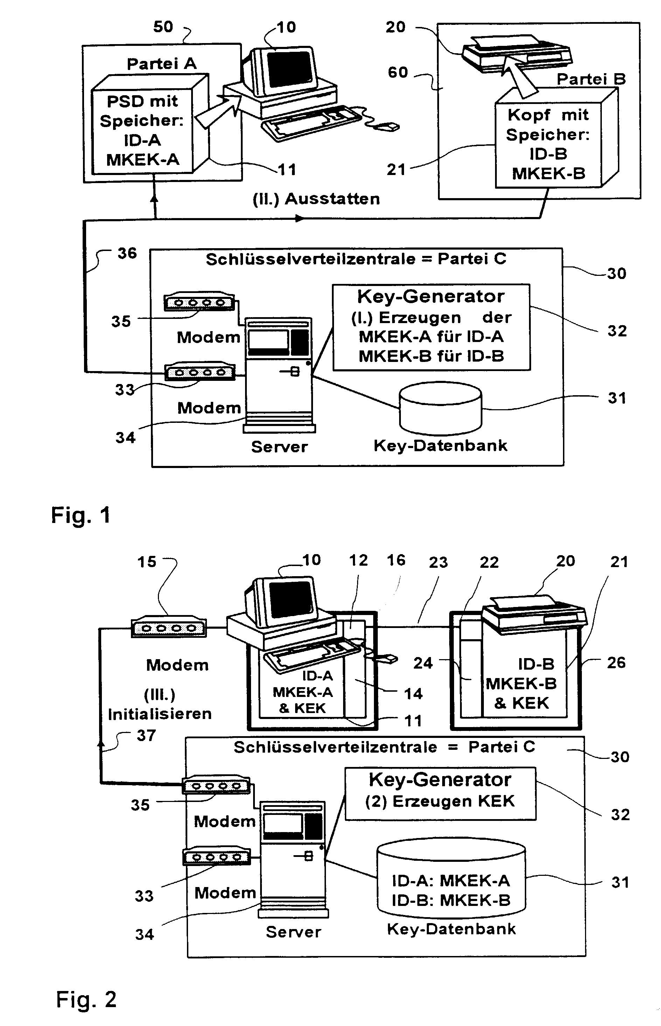

Die Figur 1 zeigt eine Anordung zur Ausstattung von Speichern zweier Geräte eines Systems zu deren Ausstattung mit einem Masterschlüssel durch ein drittes Gerät. Es ist vorgesehen, daß die Speicher eine erste und zweite Partei A und B bilden. Die Speicher sind in eine an sich bekannte - nicht gezeigte - Vorrichtung eingesetzt, die zum Ausstatten von Speichern mit Daten ausgebildet ist und mit einem Server 34 in Verbindung steht. Der Server 34 ist Bestandteil einer gesicherten Schlüsselverteilzentrale 30 und bildet eine beteiligte dritte Partei. Ein programmierbarer nichtflüchtiger Speicherbaustein ist beispielsweise ein EEPROM. Das Ausstatten erfolgt in einer gesicherten Umgebung 50, 60 beim Hersteller der Geräte des Systems bzw. der Frankiereinrichtung, beispielsweise durch Laden des unverschlüsselten Masterschlüssels und Identifikationsdaten sowie gegebenenfalls weiterer Daten in die dafür vorgesehenen Speicherbereiche bzw. durch ein Programmieren eines Speicherbausteines. Beim Laden erfolgt ein gesichertes Auslesen des unverschlüsselten Masterschlüssels aus einer Datenbank 31 des Servers. Ein gesichertes Auslesen einer Datenbank 31 des Servers 34 erfordert einen sicheren Kanal 36, beispielsweise eine sichere Datenleitung 36 zwischen der gesicherten Schlüsselverteilzentrale 30 und den gesicherten Umgebungen 50 und 60. In gesicherter Umgebung 50, 60 ist vorzugsweise ein handelsübliches Programmiergerät zur Programmierung eines Speicherbausteines angeordnet. Das Programmiergerät ist mit entsprechenden mit der sicheren Datenleitung 36 verbundenen Empfangsmitteln bzw. Eingabemitteln ausgestattet. Beispielsweise soll ein EEPROM programmiert werden.

Es ist in einer anderen Variante vorgesehen, daß der zu programmierende nichtflüchtige Speicherbaustein zuerst in das Gerät 10, 20 eingebaut und dann programmiert wird, wobei das Gerät 10, 20 selbst zur Programmierung ausgebildet ist.

Das erste Gerät ist beispielsweise ein mit einem Modem 15 ausgestattetes Meter 10, welches mit einem Modem 33 der Schlüsselverteilzentrale über die sichere Datenleitung 36 in Kommunikationsverbindung gebracht wird. Das Meter hat selbst keine Druckeinrichtung sondern dient im Normalbetrieb lediglich als gesicherte Buchungseinrichtung, welche mit Ein- und Ausgabemitteln gemeinsam in einem Sicherheitsgehäuse 16 untergebracht ist. Für den Normalbetrieb kann externe Druckeinrichtung über einen ungesicherten Kanal, beispielsweise eine ungesicherte Datenleitung 23, angeschlossen werden. Ein Meter kann ein Sicherheitsmodul mit einem Sicherheitsgehäuse enthalten. Das Sicherheitsmodul enthält vorzugsweise einen OTP-Prozessor (one time programmable), eine Hardwareabrechnungsschaltung und Speicher zur Speicherung der Abrechnungsdaten in Postregistern. Der OTP-Prozessor hat eine Datenverarbeitungs- und Speicherkapazität für spezielle Anwendungen bzw. Sondermodi. Ein solcher Sondermodus zur Speicher-Programmierung kann natürlich nur vom Hersteller selbst, beispielsweise über die Tastatur des Meters und/oder mittels einer speziellen Masterchipkarte, eingestellt werden. Ein Blockschaltbild für ein Meter mit einem Sicherheitsmodul, an welches der Drucker angeschlossen ist, geht beispielsweise aus der Europäischen Patentanmeldung EP 789 333 A2 hervor. Alternativ kann ein Personalcomputer ein Modem und das Sicherheitsmodul mit dem Sicherheitsgehäuse enthalten. Eine solche Lösung wird näher dargestellt, in der nicht vorveröffentlichten Deutschen Patentanmeldung 197 11 998.0 mit dem Titel: Postverarbeitungssystem mit einer über Personalcomputer gesteuerten druckenden Maschinen-Basisstation.

Das zweite Geräte ist vorzugsweise ein in gesicherter Umgebung 60 angeordnetes handelsübliches Programmiergerät zur Programmierung eines EEPROMs, wobei das EEPROM beispielsweise für einen Druckkopf vorgesehen ist. Das zweite Gerät kann alternativ auch ein Drucker 20 sein, in welchen der Druckkopf eingesetzt wird, welcher mit der Fähigkeit zur Programmierung eines EPROMs ausgestattet ist.

Für jedes der ersten und zweiten Geräte wird also zunächst nur ein gerätespezifischer geheimer Masterschlüssel auslesegesichert in einem geeigneten Speicherbaustein nichfflüchtig gespeichert. Der Speicherbaustein enthält darüberhinaus auch Daten, die eine Identifikation des Gerätes ermöglichen, in welches er eingebaut werden soll bzw. ist. . Der Speicherbaustein kann weiterhin auch Parameterdaten enthalten, um eine bestimmte Funktion des Gerätes zu ermöglichen,

Zum Speichern des gerätespezifischen geheimen Masterschlüssels werden die folgenden Schritte ausgeführt:

(I) Erzeugen mindestens zweier gerätespezifischer Masterschlüssel in einem Schlüsselgenerator 32 einer sicheren Schlüsselverteilzentrale 30 und Speicherung jedes der gerätespezifischen Masterschlüssel zugeordnet zu Identifikationsdaten ID-x des Gerätes in einer vor einem ungesicherten Auslesen geschützten Datenbank 31, so daß für jedes Gerät 10, 20,...,i0,..., x0 eines Systems ein separater Masterschlüssel MKEK-i zur Verfügung steht, wobei die Datenbank 31 über einen Server 34 der Schlüsselverteilzentrale mit dem Schlüsselgenerator 32 verbunden ist,

(II) Ausstatten von Speichern der zu dem System gehörigen Geräte 10, 20,..,i0,..., x0 mit dem zugehörigem Masterschlüssel MKEK-i während der Herstellung der Geräte, wobei das Ausstatten durch ein gesichertes Auslesen der Datenbank 31 des Servers und Laden des Masterschlüssels MKEK-i in einen Speicher 11, 21,..., i1,..., x1 des hergestellten über Identifikationsdaten ID-i identifizierbaren Gerätes 10, 20,.., i0,..., x0 bzw. durch Programmieren des Speichers vor dem Zusammenbau des Gerätesystems erfolgt, sowie

(III) Verbinden der Geräte 10, 20,.., i0,.., x0 zu einem System und Initialisierung der zum System verbundenen Geräte 10, 20,.., i0,..., x0, wobei jeweils zwei der Geräte 10, 20,.., i0,.., x0, welche miteinander kommunizieren sollen (zum Beispiel im Normalbetrieb), mit einem geheimen gemeinsamen Verschlüsselungsschlüssel KEK ausgestattet werden.

In der Fig.2 ist eine Anordung von zwei Geräten eines Systems zu deren Initialisierung mittels eines dritten Gerätes dargestellt. Die zu übermittelnden Daten werden vom Server 34 der Schlüsselverteilzentrale 30 verschlüsselt und über Modem 35, eine ungesicherte Leitung 37 und über ein Modem 15 an ein erstes Gerät 10 gesendet. In das erste Gerät 10 ist der durch ein Sicherheitsgehäuse 16 gesicherte Speicher 11 eingebaut. Im Sicherheitsgehäuse 16 sind außerdem eine Datenverarbeitungseinheit, vorzugsweise ein OTP-Prozessor 14, und eine Schnittstelle 12 angeordnet, und miteinander und mit dem Speicher 11 schaltungsmäßig verbunden.

Über die Schnittstelle 12 und einer zweiten ungesicherten Leitung 23 ist das erste Gerät 10 mit einer Schnittstelle 22 des zweiten Gerätes 20 verbunden. In das zweite Gerät 20 ist der durch ein Sicherheitsgehäuse 26 gesicherte Speicher 21 eingebaut. Im Sicherheitsgehäuse 26 sind außerdem eine Datenverarbeitungseinheit, vorzugsweise ein OTP-Prozessor 24, und die Schnittstelle 22 angeordnet, und miteinander und mit dem Speicher 21 schaltungsmäßig verbunden. Die spezielle Datenverarbeitungs- und Speicherkapazität ist für solche Anwendungen, wie die Kommunikation zwischen Kommunikationspartner ausgebildet und ersteckt sich auch auf besondere Funktionen bzw. Sondermodi. Ein solcher Sondermodus zur Speicher-Programmierung wird bei der erstmaligen bzw. bei einer erneuten Initialisierung eines Systems mit den selben oder anderen ausgetauschen Geräten eingestellt.

Die gesicherten Speicher 11, 21 enthalten herstellermäßig zunächst nur Identifikationsdaten und den gerätespezifischen Masterschlüssel. Die an das zweite Gerät 20 zu übermittelnden Daten werden vom Server 34 der Schlüsselverteilzentrale 30 mit dem Masterschlüssel verschlüsselt und über Modem 35, den ungesicherten Kanal (z.B. eine Leitung 37) und über ein Modem 15 an ein erstes Gerät 10 gesendet und dann zum zweiten Gerät 20 weitergeleitet. Die verschlüsselt übermittelten Daten können mit dem Masterschlüssel entschlüsselt werden und betreffen einen weiteren vom Schlüsselgenerator 32 erzeugten Verschlüsselungsschlüssel KEK.

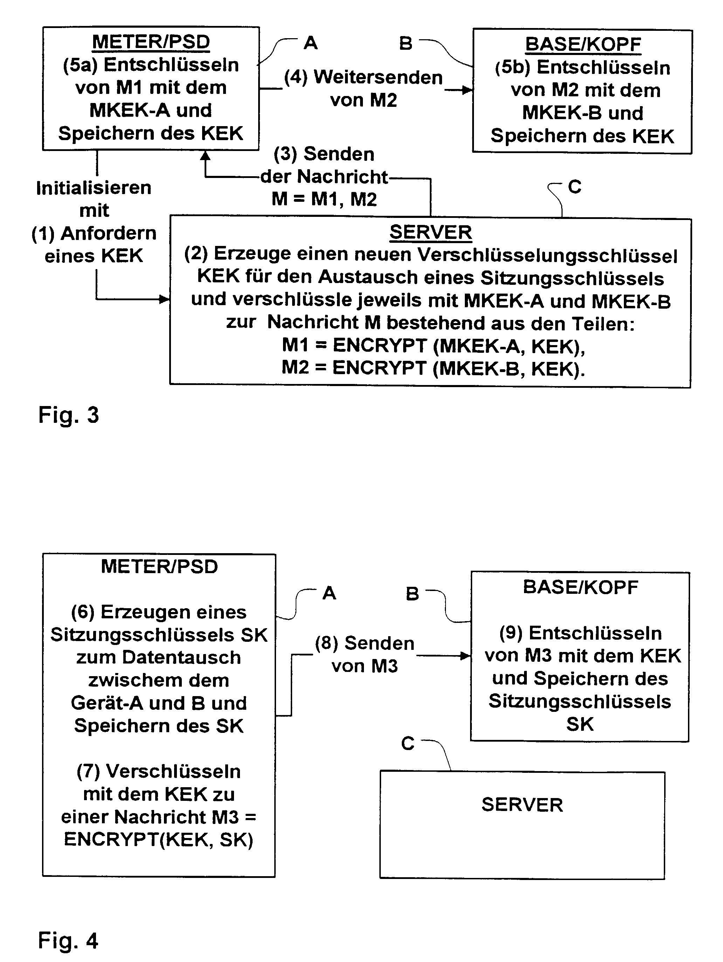

Die Fig.3 zeigt eine Darstellung der Initialisierung von zwei Geräten des Systems, wobei letztere zusätzlich mit einem gemeinsamen geheimen Verschlüsselungsschlüssel KEK ausgestattet werden. Beim Vorgang des Ausstattens sind drei Parteien A, B und C beteiligt. Im Einzelnen sind folgende Schritte vorgesehen,

(1) Anfordern einer Nachricht M einschließlich der Übermittlung zweier Identifikationsdaten ID-A, ID-B zweier Kommunikationspartner A, B an den Server 34, wobei das Anfordern von einem der Geräte 10, 20,.., i0,..., x0 nach dem Zusammenbau des Gerätesystems bei Inbetriebnahme des Systems während einer Kommunikationsverbindung mit dem Server erfolgt,

(2) Generieren eines gemeinsamen geheimen Verschlüsselungsschlüssels KEK durch einen Key-Generator 32 des Servers 34 und Bilden von Teilen M1, M2 der Nachricht M im Server 34 für die zwei Kommunikationspartner A, B entsprechend zweier benachbarter Geräte, wobei das Bilden jedes der Nachrichtenteile mit dem jeweiligen gerätespezifischen Masterschlüssel erfolgt, welcher sowohl in der Datenbank 31 des Servers 34 als auch im entsprechenden Gerät auslesesicher gespeichert vorliegt, für welches der Nachrichtenteil bestimmt ist,

(3) Senden der Nachricht M an das anfordernde Gerät 10,

(4) Empfangen der Nachricht im anforderndem Gerät und Weiterleiten mindestens eines Nachrichtenteils M2, welcher nicht für das anfordernde Gerät 10 bestimmt ist,

(5a) Entschlüsseln eines ersten Nachrichtenteils M1 im anfordernden Gerät 10 und Speichern des entschlüsselten gemeinsamen geheimen Verschlüsselungsschlüssels KEK auslesesicher im Speicher 11 des anfordernden Geräts 10, sowie (5b) Entschlüsseln des weitergeleiteten Nachrichtenteils M2 mindestens in einem anderen Gerät 20 und Speichern des entschlüsselten gemeinsamen geheimen Verschlüsselungsschlüssels KEK auslesesicher im Speicher 21 des anderen Geräts 20.

Die Fig.4 zeigt eine Darstellung des Verteilens von Sitzungsschlüsseln auf zwei Geräte des Systems. Beim Vorgang des Verteilens sind nur zwei Parteien A, B beteiligt. Im Ergebnis des Verteilens sind in jedem der ersten und zweiten Geräte dann zusätzlich neben dem Verschlüsselungsschlüssel KEK und dem gerätespezifischen geheimen Masterschlüssel MKEK-x auch ein Sitzungsschlüssel SK auslesegesichert in einem Speicher nichfflüchtig gespeichert.

Ein erstes Gerät kann auch ein PSD (Postage Security Device) für einen Computer und ein zweites Gerät kann eine Base, insbesondere ein mit entsprechender Elektronik ausgerüsteter Druckkopf oder ein Drucker sein, welcher nicht physisch mit dem Meter oder PSD verbunden ist. Die über eine ungesicherte Leitung zu übermittelnden Daten werden mit dem Sitzungsschlüssel SK verschlüsselt.

Ein Sitzungsschlüssel ist derjenige Schlüssel, mit welchen diejenigen Daten verschlüsselt werden, welche während des normalen Betriebes zwischen den beteiligten Parteinen A, B ausgetauscht werden. Vor jeder Datenübertragung zwischen den beiden Geräten 10 und 20 soll der Sitzungsschlüssel gewechselt werden, mit welchen Daten verschlüsselt werden, so daß pro Druckbild ein neuer Sitzungsschlüssel verwendet wird. Der zu wechselnde Sitzungsschlüssel SK wird in einem der beiden Geräte generiert und dem jeweils anderen Gerät in verschlüsselter Form übermittelt. Der aktuell gültige gemeinsame geheime Verschlüsselungsschlüssel KEK wird ausschließlich zum Verschlüsseln von solchen Sitzungsschlüsseln SK verwendet, welche gewechselt werden. Dabei werden folgende weitere Schritte durchlaufen:

(6) Erzeugen eines Sitzungsschlüssels SK zum Datentausch zwischen den Geräten und nichfflüchtiges Speichern des Sitzungsschlüssels SK im Speicher des jeweils einen Gerätes,

(7) Verschlüsselung mit dem geheimen Verschlüsselungsschlüssel KEK zu einer dritten Nachricht M3,

(8) Senden der dritten Nachricht M3 an das jeweils andere Gerät,

(9) Entschlüsselung der dritten Nachricht M3 mit dem geheimen Verschlüsselungsschlüssel KEK und nichfflüchtiges Speichern des Sitzungsschlüssels SK im Speicher des jeweils anderen Gerätes.

Der geheime Schlüsseltausch von Sitzungsschlüsseln SK ist an sich aus EP 782 111 A2 bekannt.

Das Meter erzeugt vor jeder Datenübertragung einen Sitzungsschlüssel, mit welchen Daten verschlüsselt werden sollen. Neu ist, daß das Meter den Sitzungsschlüssel zum jeweils beteiligten anderen Gerät in verschlüsselter Form überträgt. Zur Verschlüsselung und Entschlüsselung dient der gemeinsame Verschlüsselungsschlüssel, welcher auslesesicher in jedem Gerät gespeichert vorliegt. Das jeweilige Gerät überschreibt den gespeicheren bisherigen Sitzungsschlüssel mit dem neuen gültigen Sitzungsschlüssel. Somit kann derjenige Sitzungsschlüssel gewechselt werden, mit welchen Daten verschlüsselt werden können, die anschließend übertragen werden.

Es ist weiterhin vorgesehen, daß der Verschlüsselungsschlüssel KEK gewechselt wird. Der Verschlüsselungsschlüssel kann gewechselt werden, indem die Anforderung der vorgenannten Nachricht M in Zeitabständen vom anfordernden Gerät wiederholt wird. Die Gültigkeitsdauer der gemeinsamen geheimen Verschlüsselungsschlüssel kann somit auf ein Maß beschränkt werden, so daß eine Manipulation in Fälschungsabsicht auch bei Anwendungs modernster Methoden der Kryptoanalyse aussichtslos wird.

Einer Verschlüsselung zur Nachricht M kann eine Verküpfung des zu übermittelnden Schlüssels mit einer monoton stetig steigenden oder fallenden Größe vorausgehen. Die Verküpfung des zu übermittelnden Schlüssels mit der monoton stetig steigenden oder fallenden Größe erfolgt im Server vor einer Verschlüs-selung zur Nachricht M und deren Übermittlung. Die monoton stetig steigende oder fallende Größe liegt in jedem im System beteiligtem Gerät ebenfalls gespeichert vor und es erfolgt ein Unterscheiden einer früher aufgezeichneten Nachricht M' von einer neuen Nachricht M des Servers anhand dieser Größe. Vorzugsweise erfolgt eine XOR-Verküpfung des zu übermittelnden Schlüssels mit einer fortlaufenden Zahl vor der Verschlüsselung. Ein eventuelles Abfangen und Verändern der Nachricht bzw. Übermitteln und Weiterleiten einer früher aufgezeichneten Nachricht an die Geräte des Systems wäre damit ebenfalls ein erfolgloser Angriff. Die beteiligten Geräte können eine früher aufgezeichneten Nachricht anhand der monoton stetig steigenden oder fallenden Größe direkt oder indirekt ermitteln.

Ein Szenario für einen Angriff durch eine vierte Partei D könnte darin bestehen, das der Angreifer die Kommunikation zwischen den Parteien A und C, d.h. Meter und Server, belauscht und die ausgetauschten Nachrichten, insbesondere die Nachricht Mc vom Sever zum Meter kopiert. Der Angreifer mietet Rechenzeit auf geeigneten schnellen Computern und kompromittiert den gemeinsamen geheimen Verschlüs-selungsschlüssel KEK zwischen den Parteien A und B, d.h. Meter und Base.

Sollte nun für ein System eine neue Schlüsselverteilung benötigt werden, beispielsweise nach erneuter Initialisierung mit demselben Druckkopf im Ergebnis einer Reparatur der Base, dann bemerkt der Angreifer das Initialisieren aufgrund der vom Meter (Partei A) abgesendeten Anforderung eines KEK an den Server (Partei C). Die angreifende vierte Partei D spielt die kopierte Nachricht Mc ein, welche den kompromittierten Verschlüsselungsschlüssel enthält. Folglich wäre der Verschlüsselungsschlüssel auch weiterhin kompromittiert.

Abhilfe schafft ein erfindungsgemäßes Verfahren zur Erhöhung der Sicherheit bei einer Schlüsselverteilung, daß eine früher aufgezeichnete von einer vierten Partei D eingespielten Nachricht M' von einer neuen Nachricht M der dritten Partei C, d.h. des Servers, unterscheiden kann.

Ein bevorzugtes Verfahren zur Erhöhung der Sicherheit bei einer Schlüsselverteilung mit einer sicheren Schlüsselverteilzentrale, wobei die Datenbank 31 über einen Server 34 mit dem Schlüsselgenerator 32 verbunden ist, geht wieder von den vorgenannten Schritten aus:

(I) Erzeugen mindestens zweier gerätespezifischer Masterschlüssel in einem Schlüsselgenerator (32) einer sicheren Schlüsselverteilzentrale,
(II) Ausstatten von Speichern der zu dem System gehörigen Geräte 10, 20,..,i0,..., x0 mit dem zugehörigem Masterschlüssel MKEK-i während deren Herstellung,
(III) Verbinden der Geräte 10, 20,.., i0,..., x0 zu einem System und Initialisierung der zum System verbundenen Geräte 10, 20,.., i0,...,x0.

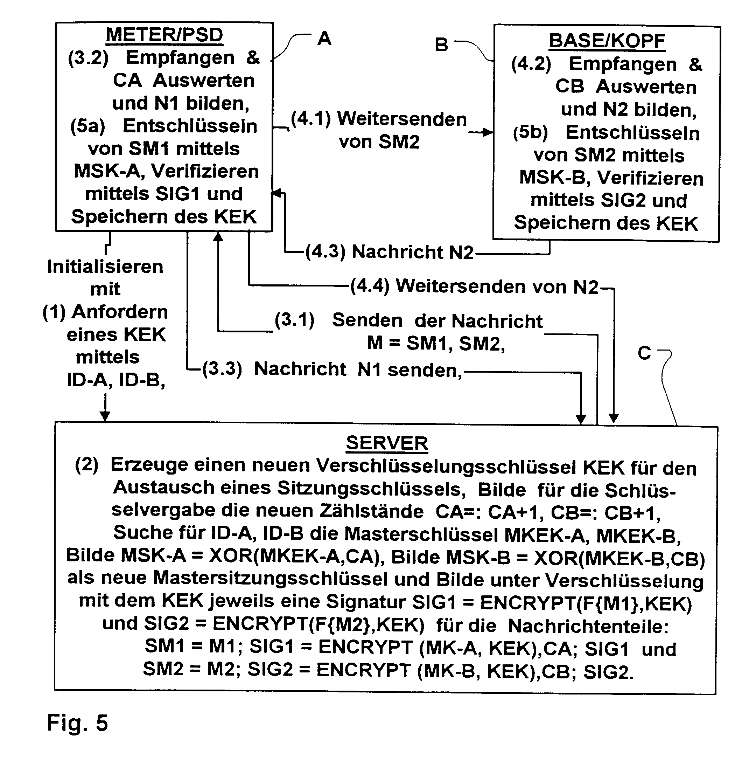

Die Fig.5 zeigt Details der Initialisierung von zwei Geräten des Systems. Das bevorzugte Verfahren umfaßt die folgenden Schritte:

(1) Anfordern einer Nachricht M einschließlich der Übermittlung zweier Identifikationsdaten ID-A, ID-B zweier Kommunikationspartner A, B an den Server 34, wobei das Anfordern von einem der Geräte 10, 20,.., i0,..., x0 nach dem Zusammenbau des Gerätesystems bei Inbetriebnahme des Systems während einer Kommunikationsverbindung mit dem Server erfolgt,
(2) Generieren eines gemeinsamen geheimen Verschlüsselungsschlüssels KEK durch einen Key-Generator 32 des Servers 34 und Bilden von Teilen SM1, SM2 der Nachricht M im Server 34 für die zwei Kommunikationspartner A, B entsprechend zweier benachbarter Geräte, wobei für die Schlüsselvergabe des generierten geheimen Verschlüsselungsschlüssels KEK höhere aktuelle Zählstände CA, CB durch eine erste mathematische Funktion ermittelt werden, wobei für die zwei Kommunikationspartner A, B aktuelle Mastersitzungsschlüssel MSK-A, MSK-B durch Verknüpfung der ermittelten aktuellen Zählstände CA, CB mit dem jeweiligen gerätespezifischen Masterschlüssel MKEK-A, MKEK-B gemäß einer zweiten mathematischen Funktion generiert werden, wobei der an die zwei Kommunikationspartner A, B zu vergebende Verschlüsselungsschlüssel KEK mit dem generierten aktuellen Mastersitzungsschlüssel MSK-A bzw. MSK-B verschlüsselt wird und mit dem Zählstand CA bzw. CB sowie mit einer Signatur SIG1 bzw. SIG2 ergänzt den jeweiligen Nachrichtenteil SM1 bzw. SM2 bildet, wobei die Signatur durch Anwendung einer dritten mathematischen Funktion auf den jeweiligen Nachrichtenteil gebildet wird,
(3) Übermitteln von Nachrichten M,N zwischen dem anfordernden Gerät und dem Server, wobei die aus den zwei Nachrichtenteilen SM1 bzw. SM2 bestehende erste Nachricht M an das anfordernde Gerät gesendet (3.1) und dort empfangen (3.2) wird oder anderenfalls die die Nachrichtenübermittlung wiederholt wird, wobei im anforderndem Gerät ein erwarteter Zählstand CA' für den Schlüsseltausch generiert wird und die empfangene erste Nachricht M bezüglich des Zählstandes CA desjenigen Nachrichtenteils SM1 ausgewertet wird, der das anfordernde Gerät betrifft, wobei eine erste Rückmeldenachricht N1 gebildet und zum Server zurückgesendet (3.3) wird, um den Empfang des ersten Nachrichtenteils SM1 der ersten Nachricht M zu bestätigen, falls der ausgewertete Zählstand CA nicht kleiner ist, als der im anforderndem Gerät generierte erwartete Zählstand CA',
(4) Übermitteln mit Weiterleiten (4.1) mindestens eines Nachrichtenteils SM2, welcher für den Kommunikationspartner B des anfordernden Gerätes bestimmt ist, wobei im im anderen Gerät, das der Kommunikationspartner B ist, ein erwarteter Zählstand CB' für den Schlüsseltausch generiert wird und wobei der Nachrichtenteil SM2 bezüglich des Zählstandes CB ausgewertet wird, der den Kommunikationspartner B betrifft, wobei im Ergebnis des Auswertens (4.2) eine zweite Rückmeldenachricht N2 gebildet, zum anfordernden Gerät übermittelt (4.3) und über das anfordernde Gerät zum Server zurückgesendet (4.4) wird, um den Empfang des zweiten Nachrichtenteils SM2 der ersten Nachricht M zu bestätigen, falls der ausgewertete Zählstand CB nicht kleiner ist, als der im anderen Gerät generierte erwartete Zählstand CB',
(5a) Generieren eines neuen aktuellen Mastersitzungsschlüssels MSK-A' analog des aktuellen Mastersitzungsschlüssels MSK-A und Entschlüsseln eines ersten Nachrichtenteils SM1 im anfordernden Gerät mittels des generierten neuen Mastersitzungsschlüssels MSK-A', um den Verschlüsselungsschlüssel KEK zu ermitteln, wobei eine Vergleichssignatur SIG1' zum Verifizieren gebildet wird und das Verifizieren des ersten Nachrichtenteils SM1 mittels der übermittelten ersten Signatur SIG1 erfolgt, sowie Speichern des entschlüsselten gemeinsamen geheimen Verschlüsselungsschlüssels KEK auslesesicher im Speicher des anfordernden Gerätes, wenn der Verschlüsselungsschlüssel KEK gültig ist oder Abbrechen der Operation, wenn er ungültig ist, und

(5b) Generieren eines neuen aktuellen Mastersitzungsschlüssels MSK-B' analog des aktuellen Mastersitzungsschlüssels MSK-B für das andere Gerät und Entschlüsseln eines zweiten Nachrichtenteils SM2 im anderen Gerät mittels des generierten neuen Mastersitzungsschlüssels MSK-B', um den Verschlüsselungsschlüssel KEK zu ermitteln, wobei eine Vergleichssignatur SIG2' zum Verifizieren gebildet wird und das Verifizieren des zweiten Nachrichtenteils SM2 mittels der übermittelten ersten Signatur SIG2 erfolgt, sowie Speichern des entschlüsselten gemeinsamen geheimen Verschlüsselungsschlüssels KEK auslesesicher im Speicher des anderen Gerätes, wenn der Verschlüsselungsschlüssel KEK gültig ist oder Abbrechen der Operation, wenn er ungültig ist.

Als erste mathematische Funktion, um höhere aktuelle Zählstände CA, CB zu bilden, eignet sich ein Inkrementieren, beispielsweise gemäß der Formel (1):

$$CA =: CA + 1 \text{ bzw. } CB =: CB + 1 \qquad (1)$$

Natürlich kann auch eine andere Funktion zur Bildung einer monoton stetig steigenden Größe verwendet werden, um höhere aktuelle Zählstände zu bilden,

Als zweite mathematische Funktion eignet sich eine XOR- Verknüpfung. Es ist vorgesehen, daß für die zwei Kommunikationspartner A, B aktuelle Mastersitzungsschlüssel MSK-A, MSK-B durch XOR-Verknüpfung der ermittelten aktuellen Zählstände CA, CB mit dem jeweiligen gerätespezifischen Masterschlüssel MKEK-A, MKEK-B generiert werden.

Die Signatur wird durch Anwendung einer dritten mathematischen Funktion auf den jeweiligen Nachrichtenteil nach den Formeln (2),(3):

$$SIG1 = ENCRYPT(F\{M1\},KEK), \qquad (2)$$

$$\text{mit } M1 = ENCRYPT(MK\text{-}A, KEK), CA \qquad \text{bzw.}$$

$$SIG2 = ENCRYPT(F\{M2\},KEK), \qquad (3)$$

mit M2 = ENCRYPT(MK-B, KEK),CB gebildet. Als Verschlüsselungsalgorithmus ENCRYPT eignet sich beispielsweise der Data Encryption Standard (DES). Die Funktion F begrenzt die Datenlänge der zu verschlüsselnden Mitteilung M1, M2. Beispielsweise kann eine an sich bekannte Truncations-Vorschrift zur Kürzung verwendet werden. Der KEK ist der Schlüssel für die DES-Verschlüsselung der gekürzten Mitteilung, wobei die gekürzte Mitteilung nur 64 Bit lang sein darf. Vorteilhaft kann ein modifizierter CBC-Modus zur Kürzung der Mitteilung M1, M2 verwendet werden, wobei im Unterschied zum CBC-Modus nur ein zuletzt gebildetes verschlüsseltes Datenwort als digitale Signatur verwendet wird. Die Kürzung Kürzung der Mitteilung auf 64 Bit erfolgt durch Unterteilung der Mitteilung in Gruppen G1, G2, G3,..., Gn von jeweils 8 Byte. Die Gruppe G1 wird zuerst mit dem KEK nach dem DES-Algorithmus verschlüsselt zu einem Datenwort S0 von 64 Bit Länge. Das Datenwort S0 wird mit der zweiten Gruppe G2 mittels der XOR-Funktion verknüpft und dann mit dem KEK nach dem DES-Algorithmus verschlüsselt zu einem Datenwort S1 von 64 Bit Länge. Das Datenwort S1 wird mit der dritten Gruppe G3 mittels der XOR-Funktion verknüpft und dann mit dem KEK nach dem DES-Algorithmus verschlüsselt zu einem Datenwort S2 von 64 Bit Länge. Das letzte nach dieser Bildungsvorschrift entstehende Datenwort Sn-1 hat wiederum eine Länge von 64 Bit und dient als Signatur.

Vorteilhaft erfolgt ein Generieren eines neuen aktuellen Mastersitzungsschlüssels (MSK-A' bzw. MSK-B') und das Verifizieren in den beteiligten beiden Geräten erst nach dem erfolgreichen Auswerten im anderen Gerät (Schritt 4.2) und wenn eine zweite Rückmeldenachricht (N2) gebildet und übermittelt wurde. Diese aufwendige Generierung und das Verifizieren bleibt somit auf die Fälle einer fehler- und manipulationsfreien Übermittlung der Nachricht M beschränkt. Nach dem Empfang beider Rückmeldenachrichten wird bei Erfolg die Übertragung beendet und die Verbindung unterbrochen. Anderenfalls, im Fehlerfall, wird der Zählerstand resynchronisiert, indem der Server den Zähler auf einen in der Rückmeldenachricht mitgeteilten Zählerstand des die Rückmeldenachricht sendenden Gerätes setzt.

Eine andere Möglichkeit die Sicherheit vor einem Angriff zu erhöhen beruht auf einer Verwendung des vorgenannten geheimen Schlüsselverteilverfahrens zum geheimen Schlüsseltausch einer Vielzahl (Satz) an gemeinsamen geheimen Verschlüsselungsschlüsseln. Letztere sind nur für bestimmte Zeitperiode oder nur für eine bestimmte Anzahl an Schlüsseltauschen von Sitzungsschlüsseln SK gültig. Die Anwendung des vorgenannten geheimen Schlüsselverteilverfahrens kann dann bereits beim Hersteller oder einer geeigneten anderen Stelle erfolgen, welche einen Angriff auf die Schlüsselsicherheit ausschließt oder mindestens wesentlich einschränkt.

Die Vielzahl an gemeinsamen geheimen Verschlüsselungsschlüsseln kann in einer vorbestimmten Reihenfolge mit jeweils zugeordnetem Gültigkeitskriterium vorteilhaft in Form einer Liste in den betreffenden Geräten gespeichert werden. Somit erfolgt nun eine Generierung eines Sitzungsschlüssels SK in einem der Geräte des Systems entfernt von der Schlüsselverteilzentrale 30 und einen Zugriff auf den gespeicherten aktuell gültigen gemeinsamen geheimen Verschlüsselungsschlüssels KEK im Falle eines geheimen Schlüsseltausches von Sitzungsschlüsseln SK zwischen den Geräten des Systems, wobei der vorgenannte Verschlüsselungsschlüssels KEK nur nur einen bestimmten Zeitperiode oder für eine bestimmte Anzahl an Schlüsseltauschen von Sitzungsschlüsseln SK gültig ist.

Es kann auch eine Liste für mehrere Kommunikationspartner gespeichert werden, wobei die Liste für jeweils zwei Kommunikationspartner einen aktuell gültigen gemeinsamen geheimen Verschlüsselungsschlüssel aufweist.

Die Erfindung ist nicht auf die vorliegenden Ausführungsform beschränkt, da offensichtlich weitere andere Ausführungen der Erfindung entwickelt bzw. eingesetzt werden können, die vom gleichen Grundgedanken der Erfindung ausgehend, die von den anliegenden Ansprüchen umfaßt werden.

## Patentansprüche

1. Verfahren zur sicheren Schlüsselverteilung mit einer sicheren Schlüsselverteilzentrale, **gekennzeichnet** durch die folgenden Schritte:

   (I) Erzeugen mindestens zweier gerätespezifischer Masterschlüssel in einer sicheren Schlüsselverteilzentrale (30),
   (II) Ausstatten von Speichern von Geräten (i0), die zu einem System gehören, mit dem zugehörigem Masterschlüssel (MKEK-i), während der Herstellung der Geräte in einem gesicherten Bereich (50, 60),
   (III) Verbinden der Geräte (10, 20,.., i0,..., x0) zu einem System und Initialisierung der zum System verbundenen Geräte (10, 20,.., i0,..., x0) über einen ungesicherten Kanal (37) mit Generierung, verschlüsselter Übermittlung von der sicheren Schlüsselverteilzentrale (30) und nichfflüchtiges Speichern eines entschlüsselten gemeinsamen geheimen Verschlüsselungsschlüssels (KEK) auslesesicher in den Speichern der Geräte des Systems, wobei jeweils zwei der Geräte (10, 20,.., i0,..., x0), welche miteinander kommunizieren sollen, mit einem geheimen gemeinsamen Verschlüsselungsschlüssel (KEK) ausgestattet werden.

2. Verfahren, nach Anspruch 1, **gekennzeichnet** durch die folgenden Schritte:

   (I) Erzeugen mindestens zweier gerätespezifischer Masterschlüssel in einem Schlüsselgenerator (32) einer sicheren Schlüsselverteilzentrale (30) und Speicherung jedes der gerätespezifischen Masterschlüssel zugeordnet zu Identifikationsdaten ID-x des Gerätes in einer vor einem ungesicherten Auslesen geschützten Datenbank (31), so daß für jedes Gerät (10, 20,...,i0,..., x0) eines Systems ein separater Masterschlüssel (MKEK-i) zur Verfügung steht, wobei die Datenbank (31) über einen Server (34) der Schlüsselverteilzentrale (30) mit dem Schlüsselgenerator (32) verbunden ist,
(II) Ausstatten von Speichern der zu dem System gehörigen Geräte (10, 20,..,i0,..., x0) mit dem zugehörigem Masterschlüssel (MKEK-i) während der Herstellung der Geräte, wobei das Ausstatten durch ein gesichertes Auslesen der Datenbank (31) des Servers und Laden des Masterschlüssels (MKEK-i) in einen Speicher (11, 21,..., i1,..., x1) des hergestellten über Identifikationsdaten ID-i identifizierbaren Gerätes (10, 20,.., i0,..., x0) bzw. durch Programmieren des Speichers vor dem Zusammenbau des Gerätesystems erfolgt,
(III) Verbinden der Geräte (10, 20,.., i0,..., x0) zu einem System und Initialisierung der zum System verbundenen Geräte (10, 20,.., i0,..., x0) mit

   (1) Anfordern einer Nachricht (M) einschließlich der Übermittlung zweier Identifikationsdaten (ID-A, ID-B) zweier Kommunikationspartner (A, B) an den Server (34), wobei das Anfordern von einem der Geräte (10, 20,.., i0,..., x0) nach dem Zusammenbau des Gerätesystems bei Inbetriebnahme des Systems während einer Kommunikationsverbindung mit dem Server erfolgt,
   (2) Generieren eines gemeinsamen geheimen Verschlüsselungsschlüssels (KEK) durch einen Key-Generator (32) des Servers (34) und Bilden von Teilen (M1, M2) der Nachricht (M) im Server (34) für die zwei Kommunikationspartner (A, B) entsprechend zweier benachbarter Geräte, wobei das Bilden jedes der Nachrichtenteile mit dem jeweiligen gerätespezifischen Masterschlüssel erfolgt, welcher sowohl in der Datenbank (31) des Servers (34) als auch im entsprechenden Gerät auslesesicher gespeichert vorliegt, für welches der Nachrichtenteil bestimmt ist,
   (3) Senden der Nachricht (M) an das anfordernde Gerät (10),
   (4) Empfangen der Nachricht im anfordernden Gerät und Weiterleiten mindestens eines Nachrichtenteils (M2), welcher nicht für das anfordernde Gerät (10) bestimmt ist,
   (5a) Entschlüsseln eines ersten Nachrichtenteils (M1) im anfordernden Gerät (10) und Speichern des entschlüsselten gemeinsamen geheimen Verschlüsselungsschlüssels (KEK) auslesesicher im Speicher (11) des anfordernden Geräts (10),

sowie

(5b) Entschlüsseln des weitergeleiteten Nachrichtenteils (M2) mindestens in einem anderen Gerät (20) und Speichern des entschlüsselten gemeinsamen geheimen Verschlüsselungsschlüssels (KEK) auslesesicher im Speicher (21) des anderen Geräts (20).

3. Verfahren, nach Anspruch 2, **dadurch gekennzeichnet** - daß ein gesichertes Auslesen der Datenbank (31) des Servers über eine gesicherte Leitung (36) und ein Laden des Masterschlüssels (MKEK-i) in einen Speicher (11, 21,..., x1) des hergestellten Gerätes (10, 20,.., x0) vor dem Zusammenbau des Gerätesystems in einer vor Manipulation gesicherten Umgebung des Herstelles erfolgt und - daß ein Initialisieren der Geräte des Systems erfolgt, wobei nach einem Senden der Nachricht (M) an das anfordernde Gerät (10, 20 oder x0) über einen ungesicherten Kanal (37) ein Löschen des generierten gemeinsamen Verschlüsselungsschlüssels (KEK) im Arbeitsspeicher des Servers (34) nur dann erfolgt, wenn die Nachricht an das anfordernde Gerät abgesendet wurde

4. Verfahren, nach Anspruch 3, **gekennzeichnet** durch eine Verküpfung des zu übermittelnden gemeinsamen Verschlüsselungsschlüssels (KEK) mit einer monoton stetig steigenden oder fallenden Größe im Server vor einer Verschlüsselung zur Nachricht M und deren Übermittlung, wobei die monoton stetig steigende oder fallende Größe in jedem im System beteiligtem Gerät ebenfalls gespeichert vorliegt und durch ein Unterscheiden einer früher aufgezeichneten Nachricht M' von einer neuen Nachricht M des Servers anhand dieser Größe.

5. Verfahren, nach Anspruch 4, **gekennzeichnet** dadurch, daß die vorgenannte Größe ein Zählstand eines Zählers ist.

6. Verfahren, nach Anspruch 4, **gekennzeichnet** dadurch, daß der Verschlüsselungsschlüssel (KEK) gewechselt wird.

7. Verfahren, nach Anspruch 6, **gekennzeichnet** dadurch, daß der Verschlüsselungsschlüssel gewechselt wird, indem die Anforderung der vorgenannten Nachricht M in Zeitabständen vom anfordernden Gerät wiederholt wird.

8. Verfahren, nach Anspruch 2, **gekennzeichnet** durch eine Generierung eines Sitzungsschlüssels (SK) in einem der Geräte des Systems entfernt von der Schlüsselverteilzentrale (30) und durch einen Zugriff auf den gespeicherten aktuell gültigen gemeinsamen geheimen Verschlüsselungsschlüssels

(KEK) im Falle eines geheimen Schlüsseltausches von Sitzungsschlüsseln (SK) zwischen den Geräten des Systems, wobei der vorgenannte Verschlüsselungsschlüssels KEK nur nur einen bestimmten Zeitperiode oder für eine bestimmte Anzahl an Schlüsseltauschen von Sitzungsschlüsseln SK gültig ist.

9. Verfahren, nach Anspruch 5, **gekennzeichnet** durch

(6) Erzeugen eines Situngsschlüssels SK zum Datentausch zwischen den Geräten und nichfflüchtiges Speichern des Situngsschlüssels SK im Speicher des jeweils einen Gerätes,
(7) Verschlüsselung mit dem geheimen Verschlüsselungsschlüssel KEK zu einer dritten Nachricht M3,
(8) Senden der dritten Nachricht M3 an das jeweils andere Gerät,
(9) Entschlüsselung der dritten Nachricht M3 mit dem geheimen Verschlüsselungsschlüssel KEK und nichfflüchtiges Speichern des Situngsschlüssels SK im Speicher des jeweils anderen Gerätes.

10. Verfahren, nach den Ansprüchen 1 bis 3, **gekennzeichnet** durch die folgenden Schritte:

(I) Erzeugen mindestens zweier gerätespezifischer Masterschlüssel in einem Schlüsselgenerator (32) einer sicheren Schlüsselverteilzentrale (30) und Speicherung jedes der gerätespezifischen Masterschlüssel zugeordnet zu Identifikationsdaten ID-i des Gerätes in einer vor einem ungesicherten Auslesen geschützten Datenbank (31), so daß ein für jedes Gerät (10, 20,...,i0,..., x0) eines Systems ein separater Masterschlüssel (MKEK-i) zur Verfügung steht, wobei die Datenbank (31) über einen Server (34) der Schlüsselverteilzentrale (30) mit dem Schlüsselgenerator (32) verbunden ist,
(II) Ausstatten von Speichern der zu dem System gehörigen Geräte (10, 20,..,i0,..., x0) mit dem zugehörigem Masterschlüssel (MKEK-i) während der Herstellung der Geräte, wobei das Ausstatten durch ein gesichertes Auslesen der Datenbank (31) des Servers und Laden des Masterschlüssels (MKEK-i) in einen Speicher (11, 21,..., i1,..., x1) des hergestellten über Identifikationsdaten ID-i identifizierbaren Gerätes (10, 20,.., i0,..., x0) bzw. durch Programmieren des Speichers vor dem Zusammenbau des Gerätesystems erfolgt,
(III) Verbinden der Geräte (10, 20,.., i0,..., x0) zu einem System und Initialisierung der zum System verbundenen Geräte (10, 20,.., i0,...,

x0) mit

(1) Anfordern einer Nachricht (M) einschließlich der Übermittlung zweier Identifikationsdaten (ID-A, ID-B) zweier Kommunikationspartner (A, B) an den Server (34), wobei das Anfordern von einem der Geräte (10, 20,.., i0,..., x0) nach dem Zusammenbau des Gerätesystems bei Inbetriebnahme des Systems während einer Kommunikationsverbindung mit dem Server erfolgt,

(2) Generieren eines gemeinsamen geheimen Verschlüsselungsschlüssels (KEK) durch einen Key-Generator (32) des Servers (34) und Bilden von Teilen (SM1, SM2) der Nachricht (M) im Server (34) für die zwei Kommunikationspartner (A, B) entsprechend zweier benachbarter Geräte, wobei für die Schlüsselvergabe des generierten geheimen Verschlüsselungsschlüssels (KEK) höhere aktuelle Zählstände (CA, CB) durch eine erste mathematische Funktion ermittelt werden, wobei für die zwei Kommunikationspartner (A, B) aktuelle Mastersitzungsschlüssel (MSK-A, MSK-B) durch Verknüpfung der ermittelten aktuellen Zählstände (CA, CB) mit dem jeweiligen gerätespezifischen Masterschlüssel (MKEK-A, MKEK-B) gemäß einer zweiten mathematischen Funktion generiert werden, wobei der an die zwei Kommunikationspartner (A, B) zu vergebende Verschlüsselungsschlüssel (KEK) mit dem generierten aktuellen Mastersitzungsschlüssel (MSK-A bzw. MSK-B) verschlüsselt wird und mit dem Zählstand (CA bzw. CB) sowie mit einer Signatur (SIG1 bzw. SIG2) ergänzt den jeweiligen Nachrichtenteil (SM1 bzw. SM2) bildet, wobei die Signatur durch Anwendung einer dritten mathematischen Funktion auf den jeweiligen Nachrichtenteil gebildet wird,

(3) Übermitteln von Nachrichten (M,N) zwischen dem anfordernden Gerät und dem Server, wobei die aus den zwei Nachrichtenteilen (SM1 bzw. SM2) bestehende erste Nachricht (M) an das anfordernde Gerät gesendet (3.1) und dort empfangen (3.2) wird oder anderenfalls die die Nachrichtenübermittlung wiederholt wird, wobei im anforderndem Gerät ein erwarteter Zählstand (CA') für den Schlüsseltausch generiert wird und die empfangene erste Nachricht (M) bezüglich des Zählstandes (CA) desjenigen Nachrichtenteils (SM1) ausgewertet wird, der das anfordernde Gerät betrifft, wobei eine erste Rückmeldenachricht (N1) gebildet und zum Server zurückgesendet (3.3) wird, um den Empfang des ersten Nachrichtenteils (SM1) der ersten Nachricht (M) zu bestätigen, falls der ausgewertete Zählstand (CA) nicht kleiner ist, als der im anforderndem Gerät generierte erwartete Zählstand (CA'),

(4) Übermitteln mit Weiterleiten (4.1) mindestens eines Nachrichtenteils (SM2), welcher für den Kommunikationspartner (B) des anfordernden Gerätes bestimmt ist, wobei im im anderen Gerät, das der Kommunikationspartner (B) ist, ein erwarteter Zählstand (CB') für den Schlüsseltausch generiert wird und wobei der Nachrichtenteil (SM2) bezüglich des Zählstandes (CB) ausgewertet wird, der den Kommunikationspartner (B) betrifft, wobei im Ergebnis des Auswertens (4.2) eine zweite Rückmeldenachricht (N2) gebildet, zum anfordernden Gerät übermittelt (4.3) und über das anfordernde Gerät zum Server zurückgesendet (4.4) wird, um den Empfang des zweiten Nachrichtenteils (SM2) der ersten Nachricht (M) zu bestätigen, falls der ausgewertete Zählstand (CB) nicht kleiner ist, als der im anderen Gerät generierte erwartete Zählstand (CB'),

(5a) Generieren eines neuen aktuellen Mastersitzungsschlüssels (MSK-A') analog des aktuellen Mastersitzungsschlüssels (MSK-A) und Entschlüsseln eines ersten Nachrichtenteils (SM1) im anfordernden Gerät mittels des generierten neuen Mastersitzungsschlüssels (MSK-A'), um den Verschlüsselungsschlüssel (KEK) zu ermitteln, wobei eine Vergleichssignatur (SIG1') zum Verifizieren gebildet wird und das Verifizieren des ersten Nachrichtenteils (SM1) mittels der übermittelten ersten Signatur (SIG1) erfolgt, sowie Speichern des entschlüsselten gemeinsamen geheimen Verschlüsselungsschlüssels (KEK) auslesesicher im Speicher des anfordernden Gerätes, wenn der Verschlüsselungsschlüssel KEK gültig ist oder Abbrechen der Operation, wenn er ungültig ist, und

(5b) Generieren eines neuen aktuellen Mastersitzungsschlüssels (MSK-B') analog des aktuellen Mastersitzungsschlüssels (MSK-B) für das andere Gerät und Entschlüsseln eines zweiten Nachrichtenteils (SM2) im anderen Gerät mittels des generierten neuen Mastersitzungsschlüssels (MSK-B'), um den Verschlüsselungsschlüssel (KEK) zu ermitteln, wobei eine Vergleichssignatur (SIG2') zum Verifizieren gebildet wird und das Verifizieren des zweiten Nachrichtenteils (SM2) mittels der übermittelten ersten Signatur (SIG2) erfolgt, sowie Speichern des entschlüsselten gemeinsamen geheimen Verschlüsselungsschlüssels (KEK) auslesesicher im Speicher des anderen Gerätes, wenn der Verschlüsselungsschlüssel KEK gültig ist oder Abbrechen der Operation, wenn er ungültig ist.

EP 0 948 158 A2

**Fig. 1**

**Fig. 2**

13

EP 0 948 158 A2

```
┌─────────────────────────┐          A      B          ┌─────────────────────────┐
│      METER/PSD          │  ⌐A          B⌐            │      BASE/KOPF          │
│  (5a) Entschlüsseln     │                            │  (5b) Entschlüsseln     │
│   von M1 mit dem        │  (4) Weitersenden          │   von M2 mit dem        │
│    MKEK-A und           │      von M2                │    MKEK-B und           │
│  Speichern des KEK      │                            │  Speichern des KEK      │
└─────────────────────────┘                            └─────────────────────────┘
```

(3) Senden
der Nachricht
M = M1, M2

⌐C

Initialisieren
mit
(1) Anfordern
eines KEK

**SERVER**
(2) Erzeuge einen neuen Verschlüsselungsschlüssel
KEK für den Austausch eines Sitzungsschlüssels
und verschlüssle jeweils mit MKEK-A und MKEK-B
zur Nachricht M bestehend aus den Teilen:
M1 = ENCRYPT (MKEK-A, KEK),
M2 = ENCRYPT (MKEK-B, KEK).

## Fig. 3

**METER/PSD**

(6) Erzeugen eines
Sitzungsschlüssels SK
zum Datentausch
zwischem dem
Gerät-A und B und
Speichern des SK

(7) Verschlüsseln
mit dem KEK zu
einer Nachricht M3 =
ENCRYPT(KEK, SK)

⌐A    B⌐

(8) Senden
von M3

**BASE/KOPF**

(9) Entschlüsseln
von M3 mit dem KEK
und Speichern des
Sitzungsschlüssels
SK

C⌐

**SERVER**

## Fig. 4

14

METER/PSD
(3.2) Empfangen &
CA Auswerten
und N1 bilden,
(5a) Entschlüsseln
von SM1 mittels
MSK-A, Verifizieren
mittels SIG1 und
Speichern des KEK

A

B

BASE/KOPF
(4.2) Empfangen &
CB Auswerten
und N2 bilden,
(5b) Entschlüsseln
von SM2 mittels
MSK-B, Verifizieren
mittels SIG2 und
Speichern des KEK

(4.1) Weitersenden
von SM2

Initialisieren
mit
(1) Anfordern
eines KEK
mittels
ID-A, ID-B,

(4.3) Nachricht N2

(4.4) Weitersenden von N2

(3.1) Senden der Nachricht
M = SM1, SM2,

C

(3.3) Nachricht N1 senden,

SERVER
(2) Erzeuge einen neuen Verschlüsselungsschlüssel KEK für den
Austausch eines Sitzungsschlüssels, Bilde für die Schlüsselvergabe die neuen Zählstände CA=: CA+1, CB=: CB+1,
Suche für ID-A, ID-B die Masterschlüssel MKEK-A, MKEK-B,
Bilde MSK-A = XOR(MKEK-A,CA), Bilde MSK-B = XOR(MKEK-B,CB)
als neue Mastersitzungsschlüssel und Bilde unter Verschlüsselung
mit dem KEK jeweils eine Signatur SIG1 = ENCRYPT(F{M1},KEK)
und SIG2 = ENCRYPT(F{M2},KEK) für die Nachrichtenteile:
SM1 = M1; SIG1 = ENCRYPT (MK-A, KEK),CA; SIG1 und
SM2 = M2; SIG2 = ENCRYPT (MK-B, KEK),CB; SIG2.

Fig. 5